# EUROPEAN PATENT APPLICATION

(11) **EP 2 979 932 A1**
(43) Date of publication of application: **03.02.2016**
(21) Application number: 14773735.7
(22) Date of filing: 19.03.2014
(51) Int. Cl.: B60R 19/24, B60R 19/34

(54) **BUMPER JOINING STRUCTURE AND CRUSH BOX**

(30) Priority: 28.03.2013 JP 2013067778
(71) Applicant: Aisin Seiki Kabushiki Kaisha, Kariya-shi Aichi 448-8650 (JP); Aisin Takaoka Co., Ltd., Toyota-shi, Aichi 473-8501 (JP); Aisin Keikinzoku Kabushiki Kaisha, Imizu-shi, Toyama 934-8588 (JP)
(72) Inventor: KANEKO, Takanobu, Kariya-shi, Aichi 4488650 (JP); ITO, Yoshinori, Toyota-shi Aichi 473-8501 (JP); KITA, Kiyoichi, Imizu-shi Toyama 934-8588 (JP)
(74) Representative: Intès, Didier Gérard André
(86) International application number: PCT/JP2014/001569
(87) International publication number: WO 2014/156065

(57) **Abstract**

Provided is a bumper joining structure, including: a bumper reinforcement having a front portion extending in a vehicle width direction, and a pair of flange portions extending from both edge portions of the front portion in a vehicle up-down direction, wherein the pair of flange portions include first joining portions; and a plurality of crush boxes arranged on the bumper reinforcement so as to be spaced apart from each other in the vehicle width direction, the plurality of crush boxes having a tubular shape which has a pair of end portions in a vehicle front-rear direction and side surfaces extending in the vehicle front-rear direction, wherein one of the pair of end portions is mounted to the front portion, and the side surfaces include second joining portions which join to the first joining portions.

## Description

### Technical Field

The present invention relates to a bumper joining structure including a bumper reinforcement and crush boxes.

### Background Art

In general, a bumper reinforcement is used at a front end portion of a vehicle, and is mounted to a vehicle frame through intermediation of a pair of crush boxes configured to absorb collision in the event of collision of the vehicle. The bumper reinforcement is formed into a predetermined shape in cross section by pressing or bending a substantially rectangular metal plate. Hitherto, various attempts are made in a joining structure between the bumper reinforcement and the crush boxes.

For example, in Patent Literature 1, there are disclosed crush boxes and a bumper reinforcement including flanges on both upper and lower sides in a longitudinal direction. At bottom portions of the crush boxes, each of the crush boxes is fixed in close contact with a coupling portion of the bumper reinforcement with a bolt or the like. With this, an impact load is transmitted from the bumper reinforcement to the crush boxes in the event of collision.

Further, in Patent Literature 2, there are disclosed crush boxes and a bumper reinforcement manufactured by joining an outer panel and an inner panel to each other by spot welding. Further, also in Patent Literature 2, each of the crush boxes is fixed to the bumper reinforcement with a bolt or the like.

### Citation List

### Patent Literature

PTL 1: Japanese Patent Application Laid-Open No. 2007-38756
PTL 2: Japanese Patent Application Laid-Open No. 2012-218635

### Summary of Invention

### Technical Problem

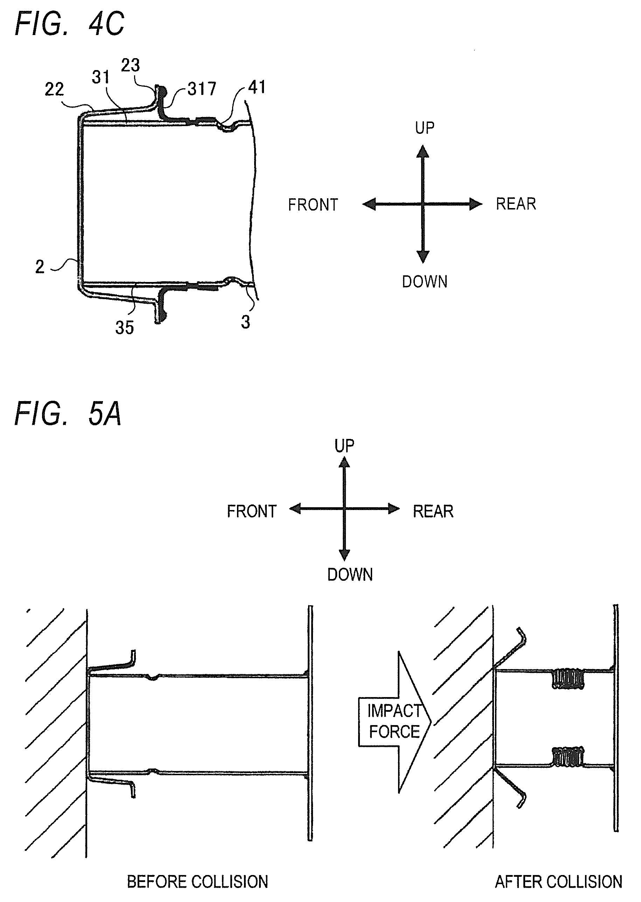

However, in Patent Literature 1, the flanges of the bumper reinforcement are not fixed to the crush boxes. Therefore, when the vehicle is collided and an impact force is applied from a front side of the vehicle, the flanges of the bumper reinforcement are deformed to be opened in an up-down direction as illustrated in FIG. 5A herein. When the flanges are deformed as described above, in the bumper reinforcement, a moment of inertia of the cross section with respect to a straight line extending in a vehicle front-rear direction through the center of the cross section of the bumper reinforcement in FIG. 5A is decreased. With this, bending rigidity of the bumper reinforcement against the collision force is reduced. Further, the bumper reinforcement is further deformed due to the impact force, thereby reducing a load to be applied to the crush boxes. As a result, the crushing amount is reduced in the crush boxes, and hence impact energy applied to the crush boxes is not absorbed sufficiently.

On the other hand, in Patent Literature 2, the bumper reinforcement has a width in cross section in a crushing direction of the crush boxes. Therefore, the bumper reinforcement is more liable to be deformed in the width in cross section due to the impact force of the collision of the vehicle, thereby reducing the impact force to be transmitted to the crush boxes. As a result, the crushing amount is reduced in the crush boxes, and hence the impact energy applied to the crush boxes is not absorbed sufficiently.

The present invention has been made to solve the above-mentioned problems, and has an object to provide a bumper joining structure capable of suppressing deformation of a bumper reinforcement so that a sufficient crushing amount can be generated in crush boxes to satisfactorily absorb impact energy in the event of collision of a vehicle.

### Solution to Problem

In order to achieve the above-mentioned object, according to one embodiment of the present invention, there is provided a bumper joining structure, including: a bumper reinforcement having a front portion extending in a vehicle width direction, and a pair of flange portions extending from both edge portions of the front portion in a vehicle up-down direction, wherein the pair of flange portions include first joining portions; and a plurality of crush boxes arranged on the bumper reinforcement so as to be spaced apart from each other in the vehicle width direction, the plurality of crush boxes having a tubular shape which has a pair of end portions in a vehicle front-rear direction and side surfaces extending in the vehicle front-rear direction, wherein one of the pair of end portions is mounted to the front portion, and the side surfaces include second joining portions which join to the first joining portions.

Further, in the bumper joining structure according to the one embodiment of the present invention, the first joining portions are end portions of the pair of flange portions, and the second joining portions are flanges raised from the side surfaces.

Further, in the bumper joining structure according to the one embodiment of the present invention, the first joining portions are end flanges formed at end portions of the pair of flange portions, and the second joining portions are flanges raised from the side surfaces.

Further, in the bumper joining structure according to the one embodiment of the present invention, the flanges are formed from portions which are formed by cutting out a part of each of the side surfaces.

Further, in the bumper joining structure according to the one embodiment of the present invention, the second joining portions are bracket members fixed to the side surfaces.

Further, the bumper joining structure according to the one embodiment of the present invention further includes fragile portions provided to the side surfaces, the fragile portions positioned between each of the first joining portions and another of the pair of end portions of the plurality of crush boxes.

Further, according to one embodiment of the present invention, there is provided a crush box for being arranged on a bumper reinforcement, which has a front portion extending in a vehicle width direction and a pair of flange portions extending from both edge portions of the front portion in a vehicle up-down direction, the pair of flange portions including first joining portions, the crush box including: a tubular shape having a pair of end portions in a vehicle front-rear direction and side surfaces extending in the vehicle front-rear direction, wherein one of the pair of end portions is mounted to the front portion, and the side surfaces include second joining portions which join to the first joining portions.

### Advantageous Effects of Invention

According to the one embodiment of the present invention, the first joining portions of the flange portions of the bumper reinforcement are joined to the second joining portions of the side surfaces of each of the crush boxes. Therefore, the deformation of the bumper reinforcement can be suppressed so that the sufficient crushing amount can be generated in the crush boxes to satisfactorily absorb the impact energy in the event of collision of the vehicle.

### Brief Description of Drawings

FIG. 1A is a plan view for illustrating a bumper joining structure according to the present invention.
FIG. 1B is a front view for illustrating the bumper joining structure according to the present invention.
FIG. 1C is a perspective view for illustrating the bumper joining structure according to the present invention as viewed from a vehicle body side.
FIG. 2 is a perspective view for illustrating a crush box to be used in the bumper joining structure according to an embodiment of the present invention.
FIG. 3 is a perspective view for illustrating a crush box to be used in the bumper joining structure according to an embodiment of the present invention.
FIG. 4A is a detailed view for illustrating an example of joining between a bumper reinforcement and the crush box in the bumper joining structure according to the present invention.
FIG. 4B is a detailed view for illustrating another example of joining between the bumper reinforcement and the crush box in the bumper joining structure according to the present invention.
FIG. 4C is a detailed view for illustrating another example of joining between the bumper reinforcement and the crush box in the bumper joining structure according to the present invention.
FIG. 5A is a view for illustrating an operation of a bumper joining structure in the related art in the event of collision of a vehicle.
FIG. 5B is a view for illustrating an operation of the bumper joining structure according to the present invention in the event of collision of the vehicle.
FIG. 6 shows an example of operational data of the bumper joining structure of the present invention and that of the related art in a collision test.

### Description of Embodiments

Now, exemplary embodiments of the present invention are described referring to the accompanying drawings. The same members are denoted by the same reference symbols in the illustrations. Note that, a bumper on a front side of a vehicle is taken as an example in the following description, but the present invention is also applicable to a bumper in other portions. Further, each direction of "front", "rear", "left", "right", "up", or "down" represented as appropriate in each of the figures indicates an orientation with respect to the vehicle.

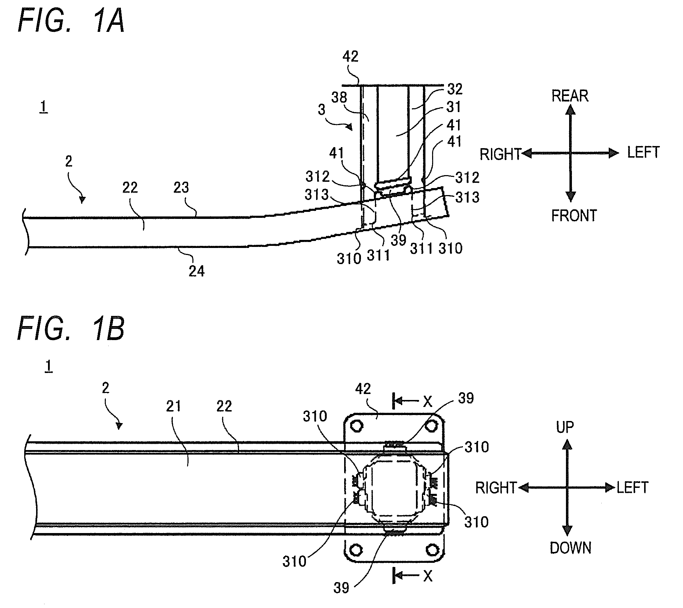

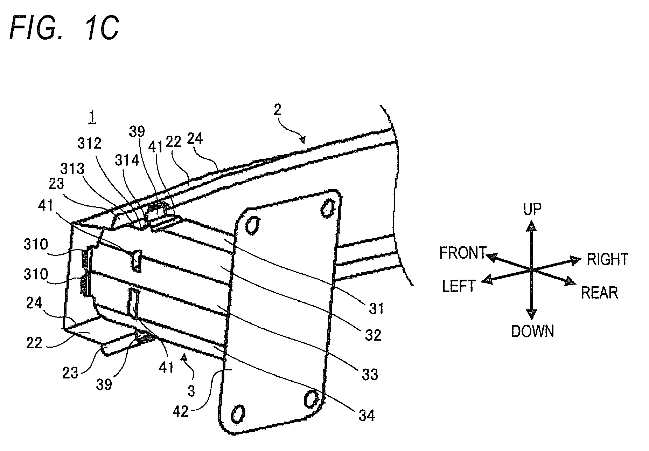

FIG. 1A, FIG. 1B, and FIG. 1C respectively illustrate a bumper joining structure according to an embodiment of the present invention. FIG. 1A is a plan view, FIG. 1B is a front view, and FIG. 1C is a perspective view as viewed from a rear side of the vehicle corresponding to a body side of the vehicle. Note that, the bumper joining structure is symmetrical in a right-left direction in the figures corresponding to a vehicle width direction of the vehicle, and hence the right side of the bumper joining structure is not illustrated. Further, in FIG. 1A and FIG. 1B, for the clarity of the illustration of the joining between a bumper reinforcement and a crush box, a part of a shape of the crush box hidden behind the bumper reinforcement is indicated by the broken lines.

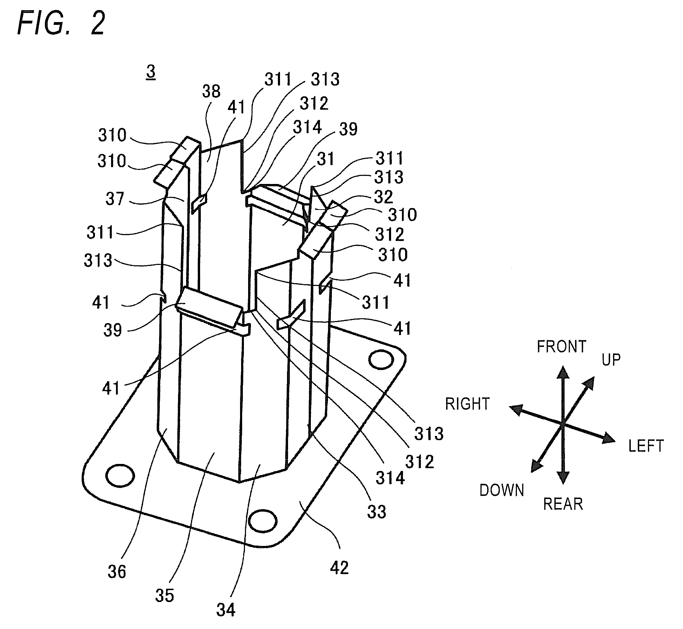

FIG. 2 is a perspective view for illustrating the crush box to be used in the bumper joining structure according to the embodiment of the present invention as viewed from the front side of the vehicle corresponding to the bumper reinforcement side. Note that, in FIG. 1A, FIG. 1B, FIG. 1C, and FIG. 2, a plate thickness of each member is not illustrated.

In FIG. 1A to FIG. 1C, a bumper joining structure 1 is mounted to a front end of the vehicle, and includes a bumper reinforcement 2 and crush boxes 3. Further, the bumper joining structure 1 is covered by a bumper cover (not shown) from the front side of the vehicle, thereby forming a front bumper.

The bumper reinforcement 2 is formed of a long plate-like steel plate having high strength and high rigidity, and the vicinities of both ends thereof are curved toward the rear side of the vehicle into an arc shape. The bumper reinforcement 2 includes a front portion 21 and flange portions 22 as first joining portions so that the bumper reinforcement 2 has a so-called hat shape in cross section. That is, the front portion 21 extends along a vehicle right-left direction in the figures corresponding to the vehicle width direction of the vehicle. A pair of flange portions 22 extend toward the rear side of the vehicle from both edge portions 24 of the front portion 21 in a vehicle up-down direction. In this embodiment, an angle formed between the front portion 21 and each of the flange portions 22 is substantially a right angle, but the angle is not limited to the right angle. Further, an upper end flange 23 extends from a rear end of the upper flange portion 22 toward the upper side of the vehicle, and similarly, a lower end flange 23 extends from a rear end of the lower flange portion 22 toward the lower side of the vehicle. End-flange joining portions 39 of the crush box 3 described later are joined to the end flanges 23 as the first joining portions.

As described above, the bumper reinforcement 2 has a hat shape in cross section, thereby enhancing bending strength thereof. However, the bumper reinforcement 2 may have various shapes as long as sufficient bending strength may be realized. Further, the vicinities of the end portions on both the right-left sides of the bumper reinforcement 2 are curved toward the rear side of the vehicle into an arc shape. However, the present invention is not limited thereto. The vicinities of the end portions on both the right-left sides of the bumper reinforcement 2 may have another shape.

On a rear side of the vicinities of both the right and left ends of the bumper reinforcement 2, the crush boxes 3 made of a metal are mounted so as to be spaced apart from each other. The crush box 3 is formed of a bent metal plate, and has a tubular shape having a plurality of side surfaces extending in a vehicle front-rear direction. The crush box 3 has a pair of end portions, that is, a front end and a rear end, and the rear end is firmly fixed to a plate-like mounting flange 42. The mounting flange 42 is mounted to the vehicle body with a bolt or the like. Further, on the side surfaces of the crush box 3, beads 41 as fragile portions are provided between the end-flange joining portions 39 and the mounting flange 42 described later. When impact is transmitted from the bumper reinforcement 2 to the crush boxes, the beads 41 prompt the crush boxes to be crushed under pressure so that impact energy applied to the crush boxes 3 is efficiently absorbed. However, in this embodiment, the beads 41 may be omitted.

The crush box 3 according to this embodiment has eight side surfaces so as to be formed into a substantially octagonal shape in cross section, but may have another shape in cross section, such as a circular shape or a quadrangular shape.

Two side surfaces 31 and 35 out of eight side surfaces 31, 32, 33, 34, 35, 36, 37 and 38 of the crush box 3 are opposed to the flange portions 22. Front ends of the side surfaces 31 and 35 are bent, thereby forming the end-flange joining portions 39 as second joining portions extending in the vehicle up-down direction. The end-flange joining portions 39 are joined to the end flanges 23 of the bumper reinforcement 2. The end-flange joining portions 39 are formed so as to be distanced toward the rear side of the vehicle from the front end of the crush box by a length substantially equal to a width of the flange portions 22 in the front-rear direction. That is, when the crush box 3 is mounted to the bumper reinforcement 2, the end-flange joining portions 39 are brought into abutment against the end flanges 23 of the flange portions 22.

The end-flange joining portions 39 are formed by forming cutouts in the side surfaces 31 and 35 of the crush box. That is, as illustrated in FIG. 2, cut lines 313 extend toward the rear side of the vehicle from starting end portions 311 up to terminal end portions 312 in the side surfaces 32 and 38 or the side surfaces 34 and 36. The cut lines 313 and cut lines 314 are connected to each other at the terminal end portions 312, and the cut lines 314 extend up to a boundary between the side surface 31 and each of the side surfaces 32 and 38 and a boundary between the side surface 35 and each of the side surfaces 34 and 36. The end-flange joining portions 39 are formed from the boundaries in the side surfaces 31 and 35. The end-flange joining portions 39 are formed of a part of the side surfaces 31 and 35. Front ends of the end-flange joining portions 39 are bent, thereby forming flanges. Front ends of the side surfaces 33 and 37 other than the side surfaces 31 and 35 are also bent, thereby forming front joining portions 310. As described above, the end-flange joining portions 39 and the front joining portions 310 are formed integrally with the side surfaces. Accordingly, a member for joining to the bumper reinforcement 2 is not required additionally, and hence the number of components can be reduced.

The crush boxes 3 constructed as described above are arranged in the vicinities of the end portions of the bumper reinforcement 2 so that the end-flange joining portions 39 are opposed to the end flanges 23. The end-flange joining portions 39 and the end flanges 23 are overlapped with each other in the vehicle front-rear direction to be joined. Therefore, an impact load to be transmitted from the bumper reinforcement 2 to the crush boxes 3 is transmitted under a state in which the end-flange joining portions 39 and the end flanges 23 are held in surface contact with each other. Thus, the impact load is transmitted stably and efficiently. Further, the front joining portions 310 are joined to the rear side of the front portion 21 of the bumper reinforcement 2 by welding or with a bolt, a screw, or the like.

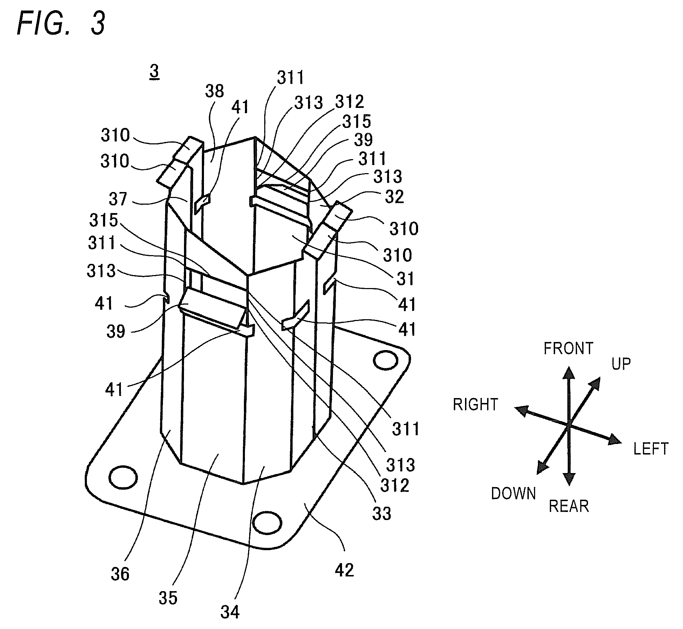

FIG. 3 is a view for illustrating a modification example of the crush box of FIG. 2. Also in FIG. 3, the plate thickness of each member is not illustrated.

In this embodiment, as illustrated in FIG. 3, the cut lines 313 may be formed in the side surfaces 31 and 35, at a boundary between the side surface 31 and the side surface 32 or the side surface 38, and at a boundary between the side surface 35 and the side surface 34 or the side surface 36. Further, the starting end portions 311 for the cut lines 313 need not match the front end portion of the crush box 3. In this case, cutouts as illustrated in FIG. 3 are formed, and hence another cut line 315 is formed between the starting end portions 311. With this, when impact is applied to the crush boxes, opening of the crush boxes (opening of the side surfaces 32, 33, 34, 36, 37, and 38 to the right and left) is suppressed so that the impact load received by the crush boxes can be increased to increase the impact energy absorbing amount.

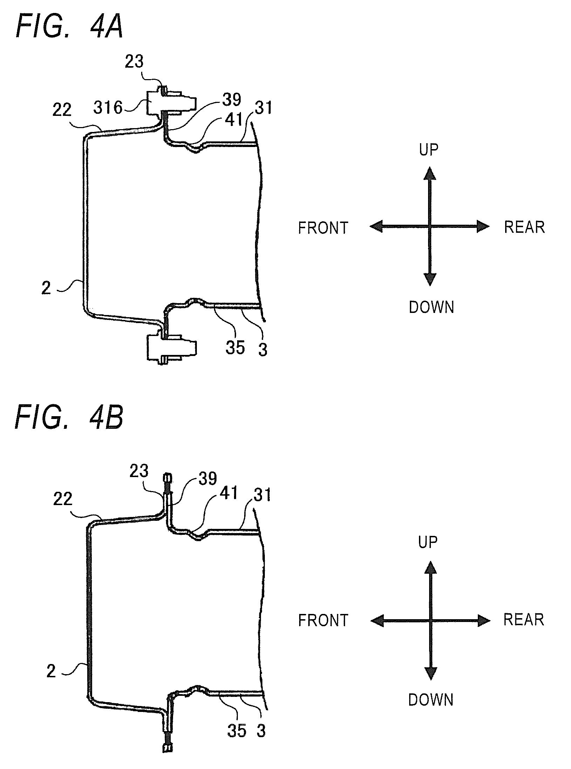

FIG. 4A, FIG. 4B, and FIG. 4C are each a cross sectional view taken along the line X-X of FIG. 1B, for illustrating a joining state between the end flanges 23 and the end-flange joining portions 39.

In FIG. 4A, bolt holes are formed through the end flanges 23 and the end-flange joining portions 39. Bolts 316 are inserted into the bolt holes so that the end flanges 23 and the flange joining portions 39 are fastened to each other with the bolts. Note that, instead of the bolts, the end flanges 23 and the end-flange joining portions 39 may be fastened to each other by screwing through use of screws and screw holes.

Further, as illustrated in FIG. 4B, the end flanges 23 and the end-flange joining portions 39 may be joined to each other by spot welding. Further, the bumper reinforcement 2 and the crush boxes 3 may be joined to each other through use of another member. For example, as illustrated in FIG. 4C, one end of each of bent bracket members 317 is joined to the side surface 31 or 35 of the crush box 3, whereas another end of each of the bracket members 317 is joined to the end flange 23. The bracket members 317 and each of the crush box 3 and the bumper reinforcement 2 are fixed to each other by welding, but may be fixed with a bolt, a screw, or the like.

Further, joining methods illustrated in FIG. 4A to FIG. 4C may be combined with one another.

In this embodiment, the end flanges 23 are formed in the bumper reinforcement 2, and the end-flange joining portions 39 are formed in the crush box 3, to thereby join the bumper reinforcement 2 and the crush boxes 3 to each other. However, the present invention is not limited thereto. The bumper reinforcement 2 and the crush boxes 3 may be directly joined between the flange portions 22 and the side surface 31 or 35. In this case, the end flanges 23 and the end-flange joining portions 39 need not be formed. Also in this case, various fastening methods such as bolt fastening, screwing, and welding may be used. Further, the direct joining and any one of the joining methods illustrated in FIG. 4A to FIG. 4C may be combined with one another.

Further, in this embodiment, the end flanges 23 and the end-flange joining portions 39 are joined to each other. However, the present invention is not limited thereto. End portions of the flange portions 22 and front surfaces of the end-flange joining portions 39 may be joined to each other. In this case, the end portions of the flange portions 22 and the front surfaces of the end-flange joining portions 39 may be joined to each other by welding.

Further, in this embodiment, the end flanges 23 and the end-flange joining portions 39 are opposed to each other and overlapped with each other in the vehicle front-rear direction to be joined. However, the present invention is not limited thereto. For example, upper ends of the end-flange joining portions 39 may be bent toward the front side of the vehicle so that the bent portion is overlapped with the flange portions 22 in the vehicle up-down direction to be joined.

According to the bumper joining structure 1 constructed as described above, the flange portions 22 of the bumper reinforcement 2 are fixed to the side surfaces 31 and 35 or the like of the crush box 3. Therefore, even when an impact force is applied to the bumper reinforcement 2 in the event of collision of the vehicle, deformation of the bumper reinforcement 2 can be suppressed. Therefore, the impact force is directly transmitted to the crush boxes 3 to be absorbed by crushing the crush boxes 3. That is, as illustrated in FIG. 4A to FIG. 4C, the moment of inertia of the cross section of the bumper reinforcement 2 is not changed even in the event of collision of the vehicle.

FIG. 5A illustrates a bumper joining structure in the related art in the event of collision of a vehicle. As described above, in the related art of FIG. 5A, the flange portions of the bumper reinforcement and the side surfaces of the crush box are not fixed to each other. Therefore, in the event of collision of the vehicle, the flange portions are expanded in the vehicle up-down direction due to the impact force so that the above-mentioned moment of inertia of the cross section of the bumper reinforcement is decreased to reduce bending rigidity of the bumper reinforcement. As a result, the impact force causes the bumper reinforcement to be further bent so that a load to be applied to the crush boxes is reduced to delay the crushing. Further, a sufficient crushing amount cannot be obtained in the crush boxes, thereby failing to sufficiently absorb collision energy.

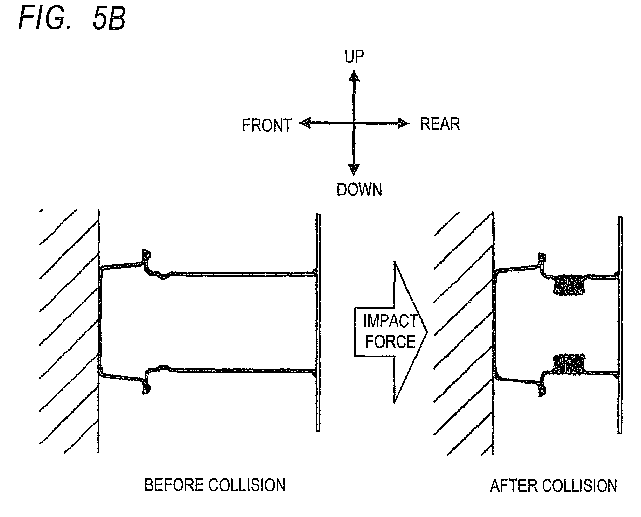

On the other hand, in the bumper joining structure according to the present invention illustrated in FIG. 5B, the flange portions and the side surfaces are joined to each other, and hence the bumper reinforcement is less liable to be deformed so that a moment of inertia of the cross section can be prevented from being changed. Therefore, the impact force is efficiently transmitted to the crush boxes, thereby being capable of obtaining the sufficient crushing amount in the crush boxes. As a result, the collision energy can be sufficiently absorbed in the crush boxes.

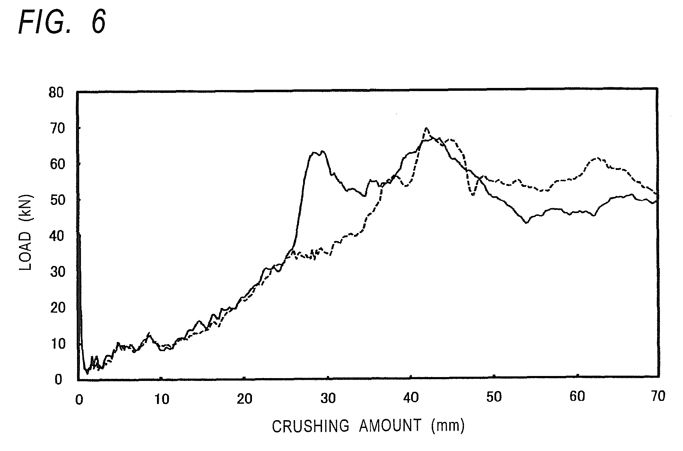

FIG. 6 is a graph for showing an example of operational data of the bumper joining structure of each of the present invention and the related art in a collision test. The horizontal axis represents a crushing amount of the crush box and the vertical axis represents a collision load. In FIG. 6, the solid line represents data of the bumper joining structure of the present invention, whereas the broken line represents data of the bumper joining structure of the related art.

Referring to FIG. 6, the bumper joining structure of the present invention receives a collision load that is approximately 1.8 times as large as that of the related art at maximum for the same crushing amount in the crush box. Thus, the bumper joining structure of the present invention absorbs more collision energy in the crush box than that of the related art.

Note that, instead of this embodiment, it is conceivable to provide beams between the upper and lower flange portions at positions other than mounting positions between the crush boxes and the bumper reinforcement to prevent the above-mentioned expanding deformation. However, when the flange portions and the side surfaces are not fixed to each other, the expanding deformation may be caused at such positions. Accordingly, the sufficient crushing amount cannot be obtained in the crush boxes. Thus, also in this case, it is preferred that the deformation of the bumper reinforcement be suppressed at the mounting positions between the crush boxes and the bumper reinforcement, that is, the positions at which the impact is transmitted to the crush boxes.

The exemplary embodiments of the present invention are described above, but the present invention is not limited to those embodiments and may be modified and changed variously within the scope of the gist thereof.

This application claims priority from Japanese Patent Application No. 2013-067778, filed on March 28, 2013, the content of which is incorporated herein by reference.

### Reference Signs List

- 1:: bumper joining structure
- 2:: bumper reinforcement
- 21:: front portion
- 22:: flange portion
- 23:: end flange
- 24:: edge portion
- 3:: crush box
- 31 to 38:: side surface
- 39:: end-flange joining portion
- 310:: front joining portion
- 311:: starting end portion
- 312:: terminal end portion
- 313 to 315:: cut line
- 316:: bolt
- 317:: bracket member
- 41:: bead
- 42:: mounting flange

## Claims

1. A bumper joining structure, comprising:
a bumper reinforcement having a front portion extending in a vehicle width direction, and a pair of flange portions extending from both edge portions of the front portion in a vehicle up-down direction, wherein the pair of flange portions include first joining portions; and
a plurality of crush boxes arranged on the bumper reinforcement so as to be spaced apart from each other in the vehicle width direction, the plurality of crush boxes having a tubular shape which has a pair of end portions in a vehicle front-rear direction and side surfaces extending in the vehicle front-rear direction, wherein one of the pair of end portions is mounted to the front portion, and the side surfaces include second joining portions which join to the first joining portions.

2. A bumper joining structure according to claim 1,
wherein the first joining portions are end portions of the pair of flange portions, and
wherein the second joining portions are flanges raised from the side surfaces.

3. A bumper joining structure according to claim 1,
wherein the first joining portions are end flanges formed at end portions of the pair of flange portions, and
wherein the second joining portions are flanges raised from the side surfaces.

4. A bumper joining structure according to claim 2 or 3, wherein the flanges are formed from portions which are formed by cutting out a part of each of the side surfaces.

5. A bumper joining structure according to claim 2 or 3, wherein the second joining portions are bracket members fixed to the side surfaces.

6. A bumper joining structure according to any one of claims 1 to 5, further comprising fragile portions provided to the side surfaces, the fragile portions positioned between each of the first joining portions and another of the pair of end portions of the plurality of crush boxes.

7. A crush box for being arranged on a bumper reinforcement, which has a front portion extending in a vehicle width direction and a pair of flange portions extending from both edge portions of the front portion in a vehicle up-down direction, the pair of flange portions including first joining portions, the crush box comprising:
a tubular shape having a pair of end portions in a vehicle front-rear direction and side surfaces extending in the vehicle front-rear direction,
wherein one of the pair of end portions is mounted to the front portion, and the side surfaces include second joining portions which join to the first joining portions.
